# EUROPÄISCHE PATENTSCHRIFT

(11) **EP 4 127 529 B1**
(45) Veröffentlichungstag und Bekanntmachung des Hinweises auf die Patenterteilung: **27.11.2024**
(21) Anmeldenummer: 21702428.0
(22) Anmeldetag: 26.01.2021
(51) Int. Cl.: F16J 15/34, F16J 15/40

(54) **SELBSTANSAUGENDE GLEITRINGDICHTUNGSANORDNUNG**
SELF-SUCTIONING SLIDE RING SEAL ASSEMBLY
ENSEMBLE JOINT D'ÉTANCHÉITÉ À BAGUE COULISSANTE À AUTO-ASPIRATION

(30) Priorität: 24.03.2020 DE 102020203767
(43) Veröffentlichungstag der Anmeldung: 08.02.2023
(73) Patentinhaber: EagleBurgmann Germany GmbH & Co. KG, 82515 Wolfratshausen (DE)
(72) Erfinder: LANG, Klaus, 82547 Eurasburg (DE); ZAUNER, Thomas, 82049 Pullach (DE)
(74) Vertreter: Hoefer & Partner Patentanwälte mbB
(86) Internationale Anmeldenummer: PCT/EP2021/051731
(87) Internationale Veröffentlichungsnummer: WO 2021/190803

(56) Entgegenhaltungen:
- EP-A1- 3 318 784
- DE-A1- 2 444 544
- DE-A1- 3 619 489
- JP-A- H05 196 148
- JP-A- H08 303 606
- US-A- 4 645 414

## Beschreibung

Die vorliegende Erfindung betrifft eine selbstansaugende Gleitringdichtungsanordnung, welche ein Sperrgas, insbesondere Luft, selbstständig ansaugen kann.

Gleitringdichtungsanordnungen sind aus dem Stand der Technik in unterschiedlichen Ausgestaltungen bekannt. Eine übliche Betriebsweise bei Gleitringdichtungsanordnungen ist dabei, eine sog. "Sperrgaseinrichtung" vorzusehen, welche zur Abdichtung am Dichtspalt ein Sperrgas bereitstellt. Das Sperrgas weist einen etwas höheren Druck als ein Druck des abzudichtenden Mediums auf, wodurch eine Leckage des abzudichtenden Mediums durch den Dichtspalt aufgrund des Druckunterschieds zum Sperrgas vermieden wird. Derartige Sperrgaseinrichtungen sind jedoch zusätzliche Bauteile und verteuern sowohl die Investition als auch den Betrieb der Gleitringdichtungsanordnung. Allerdings stellen derartige Sperrgaseinrichtungen eine besonders sichere Abdichtung der Gleitringdichtungsanordnung bereit. Häufig muss bei Sperrgaseinrichtungen jedoch die Gleitringdichtungsanordnung noch eine zweite Gleitringdichtung aufweisen, so dass eine sog. "Tandem-Bauweise" vorliegt. Es gibt jedoch eine Vielzahl von Anwendungen, bei denen aufgrund von Kostengründen und/oder Bauraumgründen eine derartige Tandem-Bauweise mit Sperrgaseinrichtung nicht möglich ist, beispielsweise im Automotive-Bereich.

Aus der DE 24 44 544 A1 und der DE 36 19 489 A1 sind Gleitringdichtungsanordnungen mit externen Sperrgaseinrichtungen bekannt, bei denen das Sperrgas durch eine Durchgangsöffnung im stationären Gleitring bis zum Dichtspalt geführt wird. Hierbei ist in der Durchgangsöffnung eine Drossel vorgesehen. Spiralförmige Nuten sind entweder nur im rotierenden Gleitring oder nur im stationären Gleitring vorgesehen. Ferner zeigt die JP H05 196148 A eine Gleitringdichtungsanordnung mit Durchgangsöffnungen im stationären Gleitring und spiralförmigen Nuten im rotierenden Gleitring.

Es ist daher Aufgabe der vorliegenden Erfindung, eine Gleitringdichtungsanordnung bereitzustellen, welche bei einem Aufbau und einfacher, kostengünstiger Herstellbarkeit auf eine Sperrgaseinrichtung verzichten kann und welche trotzdem ein Sperrgas im Dichtspalt zur Abdichtung eines flüssigen Mediums aufweist.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass ein Sperrgas selbstständig angesaugt werden kann. Dadurch können die Kosten für eine derartige Gleitringdichtungsanordnung sehr gering gehalten werden. Dies ermöglicht es, Gleitringdichtungen in einem weiten Feld, insbesondere auch bei Automotive-Anwendungen, zu verwenden. Dies wird erfindungsgemäß dadurch erreicht, dass die Gleitringdichtungsanordnung eine Gleitringdichtung mit einem rotierenden Gleitring und einem stationären Gleitring aufweist. Der rotierende Gleitring weist eine erste Gleitfläche auf und der stationäre Gleitring weist eine zweite Gleitfläche auf. Zwischen den Gleitflächen ist ein Dichtspalt definiert. Der stationäre Gleitring umfasst ferner eine Durchgangsöffnung, welche von einer Rückseite des stationären Gleitrings zur zweiten Gleitfläche führt. Somit verbindet die Durchgangsöffnung die Rückseite des stationären Gleitrings mit dessen Gleitfläche. Ferner ist eine Gaszuleitung vorgesehen, welche von einer Atmosphärenseite zur Öffnung der Durchgangsöffnung an der Rückseite des stationären Gleitrings führt. Damit ist eine gasführende Verbindung zwischen der Gleitfläche des stationären Gleitrings und der Atmosphärenseite hergestellt. Weiterhin weist wenigstens eine der beiden Gleitflächen der Gleitringe Nuten zur Gasförderung auf. Die Nuten sind in radialer Richtung des Gleitrings zwischen einer Mündung der Durchgangsöffnung und einem radial äußeren Austrittsbereich des Dichtspalts zum abzudichtenden Medium angeordnet. Somit wird im Betrieb, wenn eine Relativrotation zwischen dem rotierenden Gleitring und dem stationären Gleitring auftritt, ein gasförmiges Medium, vorzugsweise Luft, durch die Gaszufuhrleitung und die Durchgangsöffnung im stationären Gleitring in den Dichtspalt angesaugt. Die Nuten in wenigstens einer der Gleitflächen der Gleitringe erzeugen dabei einen entsprechenden Ansaugdruck zur Ansaugung des Gases durch die Durchgangsöffnung und die Gaszuleitung und eine Druckerhöhung des Mediums im Dichtspalt in Richtung zum Austrittsbereich zum abzudichtenden Medium. Damit ist es nicht mehr notwendig, dass eine Sperrgasversorgung für die Gleitringdichtungsanordnung vorgesehen wird. Dadurch können sowohl die Betriebskosten als auch die Investitionskosten für eine derartige Gleitringdichtungsanordnung signifikant reduziert werden. Die Gleitringdichtungsanordnung weist einen sehr einfachen und kostengünstigen Aufbau auf und ermöglicht trotzdem eine sichere Abdichtung eines Mediums in einem Produktbereich von einem Atmosphärenbereich. Dabei benötigt die erfindungsgemäße Gleitringdichtungsanordnung nicht einmal einen Kompressor oder dgl., da die Ansaugung des Sperrfluids für den Dichtspalt selbsttätig erfolgt.

Weiter umfasst die Gleitringdichtungsanordnung eine Drossel, welche in der Gaszuleitung angeordnet ist. Die Drossel ermöglicht eine gezielte Beschränkung einer Durchflussmenge des Gases, welche zum Dichtspalt angesaugt wird. Die Drossel ist vorzugsweise einstellbar ausgebildet. Besonders bevorzugt ist die Drossel eine Lochscheibe.

Ferner umfasst die Gleitringdichtungsanordnung einen Filter, welcher in der Gaszuleitung angeordnet ist. Der Filter verhindert, dass Schmutzpartikel oder Staub oder ähnliches über die Gaszuleitung und die Durchgangsöffnung zum Dichtspalt gelangen können. Der Filter kann dabei aus unterschiedlichsten Materialien hergestellt sein. Der Filter ist vorzugsweise unmittelbar an einem Ansaugbereich der Gaszuleitung angeordnet.

Weiter ist in der Gaszuleitung ein Rückschlagventil vorgesehen. Das Rückschlagventil ist dabei derart angeordnet, dass Gas durch die Gaszuleitung in Richtung zur Durchgangsöffnung strömen kann, jedoch nicht zurückströmen kann. Dadurch wird insbesondere im Falle eines Stillstandes der Gleitringdichtung eine ungewollte Gasströmung durch die Gaszuleitung und die Durchgangsöffnung verhindert.

Vorzugsweise sind Nuten sowohl in der ersten Gleitfläche als auch der zweiten Gleitfläche der Gleitringe angeordnet. Dadurch kann eine schnellere Ansaugung des Gases durch die Gaszuleitung und die Durchgangsöffnung ermöglicht werden. Ferner kann durch Nuten in beiden Gleitflächen auch ein höheres Druckniveau im Dichtspalt im Betrieb erzeugt werden.

Weiter bevorzugt umfasst die zweite Gleitfläche des stationären Gleitrings eine umlaufende Ringnut, wobei die Durchgangsöffnung in der umlaufenden Ringnut mündet. Dadurch wird das angesaugte Gas am Dichtspalt durch die umlaufende Ringnut in Umfangsrichtung verteilt, so dass ein gleichmäßiger Druckaufbau im Dichtspalt ermöglicht wird. Dies hat sowohl Vorteile bei einem Start der Gleitringdichtung aus einem Stillstand als auch im kontinuierlichen Betrieb.

Weiter bevorzugt sind die Nuten in den Gleitflächen derart angeordnet, dass zwischen einem radial äußersten Bereich der Nuten und einem äußeren Umfangsrand des Gleitrings immer ein in Umfangsrichtung geschlossener Gleitflächenbereich vorhanden ist. Dadurch wird insbesondere bei einem Stillstand der Gleitringdichtung eine sichere Abdichtwirkung erreicht, da dann an beiden Gleitflächen immer benachbart zu dem äußeren radialen Umfang nutfreie Gleitflächenbereiche vorhanden sind, welche im Stillstand aneinander liegen und so eine verbesserte Abdichtung ermöglichen.

Vorzugsweise liegen Fußbereiche der ersten Nuten auf einem ersten Radius R1 und Kopfbereiche der ersten Nuten auf einem zweiten Radius R2. Fußbereiche der zweiten Nuten liegen auf einem dritten Radius R3 und Kopfbereiche der zweiten Nuten liegen auf einem vierten Radius R4. Dabei ist der erste Radius R1 kleiner als der dritte Radius R3, wobei der zweite Radius R2 grösser als der dritte Radius R3 ist und wobei der vierte Radius R4 grösser als der zweite Radius R2 ist. Somit gilt R1 < R3 < R2 < R4. Dadurch wird sichergestellt, dass sich nur ein ringförmiger Überlappungsbereich zwischen den ersten und zweiten Nuten ergibt, in welchem sich die Nuten einander gegenüberliegen. Radial unterhalb und radial oberhalb des Überlappungsbereiches ergeben sich jeweils Bereiche, an denen die Nutbereiche einer Gleitfläche des entgegengesetzten Gleitringes gegenüber liegen.

Die erfindungsgemäße Gleitringdichtungsanordnung ist vorzugsweise eine Gasdichtung zur Abdichtung eines gasförmigen Mediums von einer Atmosphäre.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Schnittansicht einer Gleitringdichtungsanordnung gemäß einem bevorzugten Ausführungsbeispiel der Erfindung,
- Fig. 2: eine schematische Draufsicht auf eine Gleitfläche eines stationären Gleitrings der Gleitringdichtungsanordnung von Fig. 1, und
- Fig. 3: eine schematische Draufsicht auf eine Gleitfläche eines rotierenden Gleitrings der Gleitringdichtungsanordnung von Fig. 1.

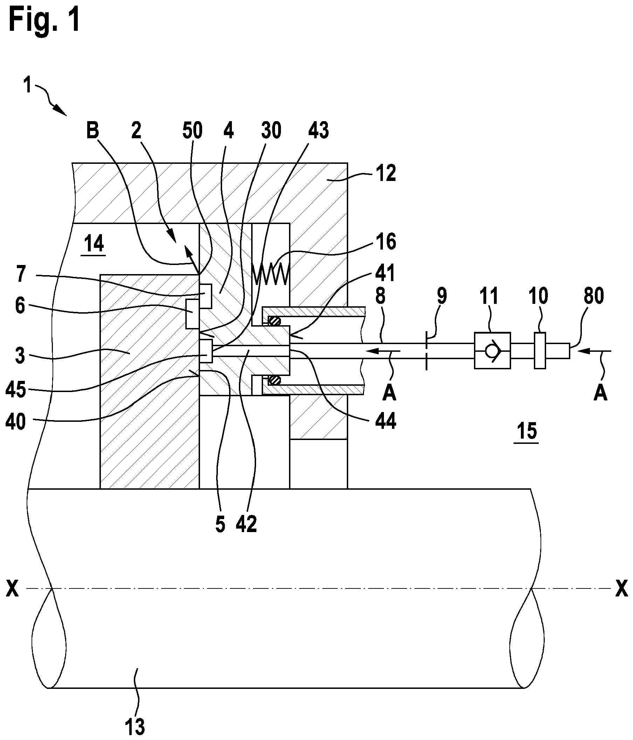

Nachfolgend wird unter Bezugnahme auf die Fig. 1 bis 3 eine Gleitringdichtungsanordnung 1 gemäß einem bevorzugten Ausführungsbeispiel der Erfindung im Detail beschrieben.

Die Gleitringdichtungsanordnung 1 umfasst eine Gleitringdichtung 2 mit einem rotierenden Gleitring 3 und einem stationären Gleitring 4. Der rotierende Gleitring 3 weist eine erste Gleitfläche 30 auf und der stationäre Gleitring 4 weist eine zweite Gleitfläche 40 auf. Zwischen den beiden Gleitflächen 30, 40 ist ein Dichtspalt 5 definiert.

Die Gleitringdichtung 2 dichtet einen Produktbereich 14 von einem Atmosphärenbereich 15 ab.

Der rotierende Gleitring 3 ist mit einer Welle 13 drehfest verbunden. Das stationäre Gleitring 4 ist mit einem Gehäuse 12 verbunden. Der stationäre Gleitring 4 ist axial beweglich und mittels einer Vorspanneinrichtung 16 vorgespannt.

Wie aus Fig. 1 ersichtlich ist, weist der stationäre Gleitring 4 ferner eine Durchgangsöffnung 42 auf. Die Durchgangsöffnung 42 verbindet dabei eine Rückseite 41 des stationären Gleitrings 4 mit der zweiten Gleitfläche 40 des stationären Gleitrings 4.

Ferner umfasst die Gleitringdichtungsanordnung 1 eine Gaszuleitung 8. Die Gaszuleitung 8 ist eingerichtet, ein Gas von einer Gasquelle, in diesem Ausführungsbeispiel Luft der Atmosphäre, zur Durchgangsöffnung 42 zuzuführen. Die Gaszuleitung 8 weist einen Einlass 80 auf und führt zu einem Einlass 44 der Durchgangsöffnung 42 an der Rückseite 41 des stationären Gleitrings.

Wie weiter aus Fig. 1 ersichtlich ist, ist eine Mündung 43 der Durchgangsöffnung 42 im stationären Gleitring 4 an einer umlaufenden Ringnut 45 angeordnet. Die Durchgangsöffnung 42 ist linear ausgebildet und parallel zu einer Axialrichtung X-X der Gleitringdichtung 2. Die Ringnut 45 ist vollständig umlaufend in der zweiten Gleitfläche 40 ausgebildet.

Somit besteht über die Gaszuleitung 8 und die Durchgangsöffnung 42 im stationären Gleitring 4 eine Fluidverbindung zwischen dem Atmosphärenbereich 15 und dem Dichtspalt 5.

Wie weiter aus Fig. 1 ersichtlich ist, umfasst die Gleitringdichtungsanordnung 1 ferner eine Drossel 9, welche in der Gaszuleitung 8 angeordnet ist. Die Drossel 9 ist in diesem Ausführungsbeispiel eine Lochscheibe.

In der Gaszuleitung 8 ist ferner ein Rückschlagventil 11 angeordnet. Das Rückschlagventil 11 verhindert ein Zurückströmen von Gas aus dem Dichtspalt 5 bzw. der Durchgangsöffnung 42 zurück zum Atmosphärenbereich 15.

Weiterhin ist ein Filter 10 vorgesehen, welcher verhindert, dass Staubpartikel oder ähnliches aus dem Atmosphärenbereich 15 in den Dichtspalt 5 gelangen können.

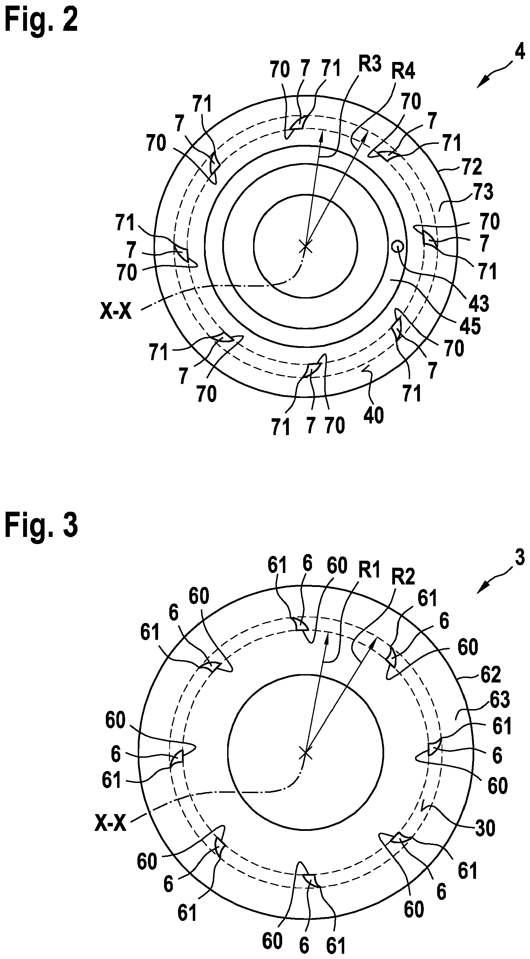

Weiterhin sind in der ersten Gleitfläche 30 des rotierenden Gleitrings 3 erste Nuten 6 vorgesehen und in der zweiten Gleitfläche 40 des stationären Gleitrings 4 zweite Nuten 7 vorgesehen. Die Gleitflächen mit den Nuten sind im Detail aus den Fig. 2 und 3 ersichtlich.

Fig. 2 zeigt eine Draufsicht der zweiten Gleitfläche 40 des stationären Gleitrings 4. Hier ist die umlaufende Ringnut 45 im Detail ersichtlich, in welche die Mündung 43 der Durchgangsöffnung 42 mündet. Radial außerhalb der Ringnut 45 sind die zweiten Nuten 7 angeordnet. Die zweiten Nuten 7 sind sichelförmig vorgesehen und weisen einen Fußbereich 70 und einen Kopfbereich 71 auf. Eine Vielzahl von zweiten Nuten 7 ist dabei in Umfangsrichtung mit jeweils gleichen Abständen von benachbarten Nuten auf einem gleichen Radius angeordnet. Wie weiter aus Fig. 2 ersichtlich ist, ist zwischen den Kopfbereichen 71 der zweiten Nuten 7 und einem äußeren Umfangsrand 72 ein umlaufender zweiter Gleitbereich 73 vorgesehen.

Die Durchgangsöffnung 42 ist geradlinig ausgebildet und verläuft parallel zu einer Axialrichtung X-X der Gleitringdichtung.

Fig. 3 zeigt eine Draufsicht der ersten Gleitfläche 30 des rotierenden Gleitrings 3 mit den ersten Nuten 6. Die ersten Nuten 6 sind sichelförmig ausgebildet und weisen einen Fußbereich 60 und einen Kopfbereich 61 auf. Dabei ist zwischen dem Kopfbereich 61 und einem äußeren Umfangsrand 62 des rotierenden Gleitrings 3 ein umlaufender erster Gleitbereich 63 ausgebildet. Somit reichen die ersten Nuten 6 nicht bis zum äußeren Umfangsrand des rotierenden Gleitrings 3. Der erste Gleitbereich 63 und der zweite Gleitbereich 73 bilden somit im Stillstand der Gleitringdichtung 2 einen Dichtdamm gegenüber dem Produktbereich 14. Dadurch wird eine Leckage im Stillstand der Gleitringdichtung durch den Dichtspalt 5 zum Atmosphärenbereich 15 im Wesentlichen vermieden. In gleicher Weise ergibt sich radial innerhalb der umlaufenden Ringnut 45 an den Gleitflächen ein Dichtdamm gegenüber dem Atmosphärenbereich 15.

Wie ein Vergleich der Fig. 2 und 3 zeigt, sind die ersten sichelförmigen Nuten 6 und die zweiten sichelförmigen Nuten 7 in gegeneinander gekreuzter Weise gekrümmt. Wie weiter aus Fig. 1 ersichtlich ist, sind die ersten Nuten 6 und die zweiten Nuten 7 dabei auch auf unterschiedlichen Radien, ausgehend von einer Mittellinie der Gleitringdichtung 2 angeordnet. Dadurch wird ein stufenförmiger Druckaufbau bei einem Anlaufen der Gleitringdichtung 2 möglich.

Wie aus Fig. 3 ersichtlich ist, liegen die Fußbereiche 60 der ersten Nuten 6 auf einem ersten Radius R1. Die Kopfbereiche 61 liegen auf einem zweiten Radius R2.

Die Fußbereiche 70 der zweiten Nuten 7 liegen auf einem dritten Radius R3 und die Kopfbereiche 71 der zweiten Nuten 7 liegen auf einem vierten Radius R4 (vgl. Fig. 2).

Wie aus den Fig. 1, 2 und 3 ersichtlich ist, ist dabei der erste Radius R1 kleiner als der dritte Radius R3. Ferner ist der zweite Radius R2 größer als der dritte Radius R3. Der vierte Radius R4 ist wiederum größer als der zweite Radius R2. Somit gilt R1 < R3 < R2 < R4. Dadurch wird sichergestellt, dass sich die Nuten 6, 7 in Radialrichtung nur an einem Teilbereich der Gleitflächen überlappen.

Eine Tiefe der ersten Nuten 6 ist dabei gleich einer Tiefe der zweiten Nuten 7.

Dadurch wird ein stufenweiser Druckaufbau bei einer Rotation des rotierenden Gleitrings 2 im Dichtspalt 5 möglich.

Durch die Relativrotation zwischen dem rotierenden Gleitring 3 und dem stationären Gleitring 4 wird im Bereich der Ringnut 45 und somit auch im Bereich der Durchgangsöffnung 42 ein Unterdruck erzeugt, so dass Luft durch den Filter 10 und über das Rückschlagventil 11 und durch die Drossel 9 in die Gaszuleitung 8 angesaugt wird. Somit ist es möglich, dass die Gleitringdichtung 2 im Betrieb das Sperrmedium im Dichtspalt 5 selbst ansaugt. Dadurch kann auf eine aufwendige Sperrgasversorgung, welche im Stand der Technik notwendig ist, verzichtet werden. Im Betrieb wird somit kontinuierlich Luft angesaugt, wie in Fig. 1 durch die Pfeile A angedeutet ist. Im Dichtspalt wird die angesaugte Luft dann als Sperrmedium verwendet und durch die ersten und zweiten Nuten 6, 7 radial nach außen in Richtung zum Produktbereich 14 gefördert. Dies ist in Fig. 1 durch den Pfeil B angedeutet. Dabei wird der Druck des Sperrgases auf einen Wert erhöht, der größer ist als der Druck des abzudichtenden Mediums.

Somit kann durch die Erfindung eine selbstansaugende Gleitringdichtungsanordnung 1 bereitgestellt werden, welche ein Gas im Betrieb selbst ansaugt. Dadurch muss keine aufwendige Sperrgasversorgung für die Gleitringdichtungsanordnung 1 vorgesehen werden. Das anzusaugende Gas ist vorzugsweise Luft. Es sei jedoch angemerkt, dass selbstverständlich auch ein separates Gasreservoir mit einem entsprechend einem Anwendungsfall spezifischen Gas, beispielsweise Stickstoff, vorgesehen sein kann, aus welchem Gas über die Gaszuleitung 8 zum Dichtspalt 5 angesaugt wird. Gegebenenfalls muss der Gasspeicher kontinuierlich mit neuem Gas aufgefüllt werden, um keinen unzulässigen Unterdruck im Gasspeicher zu erlauben.

### Bezugszeichenliste

- 1: Gleitringdichtungsanordnung
- 2: Gleitringdichtung
- 3: rotierender Gleitring
- 4: stationärer Gleitring
- 5: Dichtspalt
- 6: erste Nuten
- 7: zweite Nuten
- 8: Gaszuleitung
- 9: Drossel
- 10: Filter
- 11: Rückschlagventil
- 12: Gehäuse
- 13: Welle
- 14: Produktbereich
- 15: Atmosphärenbereich
- 16: Vorspanneinrichtung
- 30: erste Gleitfläche
- 40: zweite Gleitfläche
- 41: Rückseite des stationären Gleitrings
- 42: Durchgangsöffnung im stationären Gleitring
- 43: Mündung der Durchgangsöffnung
- 44: Einlass der Durchgangsöffnung
- 45: Ringnut in der zweiten Gleitfläche
- 50: Austrittsbereich
- 60: Fußbereich
- 61: Kopfbereich
- 62: äußerer Umfangsrand des rotierenden Gleitrings
- 63: erster Gleitbereich
- 70: Fußbereich
- 71: Kopfbereich
- 72: äußerer Umfangsrand des stationären Gleitrings
- 73: zweiter Gleitbereich des stationären Gleitrings
- 80: Einlass der Gaszuleitung
- A: Zufuhr in die Gaszuleitung
- B: Austritt Sperrgas aus dem Dichtspalt
- R1: erster Radius
- R2: zweiter Radius
- R3: dritter Radius
- R4: vierter Radius
- X-X: Axialrichtung

## Patentansprüche

1. Selbstansaugende Gleitringdichtungsanordnung, welche ein Sperrgas selbstständig ansaugen kann, umfassend:
- eine Gleitringdichtung (2) mit einem rotierenden Gleitring (3) mit einer ersten Gleitfläche (30) und einem stationären Gleitring (4) mit einer zweiten Gleitfläche (40), wobei zwischen der ersten und zweiten Gleitfläche ein Dichtspalt (5) definiert ist,
- wobei der stationäre Gleitring (4) eine Durchgangsöffnung (42) aufweist, welche von einer Rückseite (41) des stationären Gleitrings zu einer Mündung (43) der zweiten Gleitfläche (40) führt, und
- eine Gaszuleitung (8), welche dazu eingerichtet ist, das Sperrgas von einer Sperrgasquelle zu einem Einlass (44) der Durchgangsöffnung (42) an der Rückseite des stationären Gleitrings zu führen,
- wobei wenigstens in einer der Gleitflächen (30, 40) Nuten (6, 7) ausgebildet sind, wobei die Nuten in Radialrichtung zwischen der Mündung (43) der Durchgangsöffnung (42) und einem radial äußeren Austrittsbereich (50) des Dichtspalts (5) angeordnet sind, und ferner umfassend
- eine Drossel (9), welche in der Gaszuleitung (8) angeordnet ist,
- einen Filter (10), welcher an oder in der Gaszuleitung (8) angeordnet ist, und
- ein Rückschlagventil (11), welches in der Gaszuleitung (8) angeordnet ist.

2. Gleitringdichtungsanordnung nach Anspruch 1, wobei erste Nuten (6) in der ersten Gleitfläche (30) und zweite Nuten (7) der zweiten Gleitfläche (40) ausgebildet sind.

3. Gleitringdichtungsanordnung nach Anspruch 2, wobei die ersten Nuten (6) gegenüber den zweiten Nuten (7) in Radialrichtung der Gleitringdichtung (2) versetzt angeordnet sind.

4. Gleitringdichtungsanordnung nach einem der vorhergehenden Ansprüche, wobei in der zweiten Gleitfläche (40) des stationären Gleitrings (4) eine Ringnut (45) ausgebildet ist, wobei die Durchgangsöffnung (42) in die Ringnut (45) mündet.

5. Gleitringdichtungsanordnung nach Anspruch 1, wobei die Drossel einstellbar ist, um einen Gasdurchfluss durch die Drossel zu verändern.

6. Gleitringdichtungsanordnung nach Anspruch 1 oder 5, wobei die Drossel eine Lochscheibe ist.

7. Gleitringdichtungsanordnung nach einem der vorhergehenden Ansprüche, wobei die Nuten (6, 7) derart auf den Gleitflächen (30, 40) angeordnet sind, dass zwischen einem Kopfbereich (61, 71) der Nuten (6, 7) und einem äußeren Umfangsrand (62, 72) der Gleitringe ein nutfreier Gleitbereich (63, 73) vorhanden ist.

8. Gleitringdichtungsanordnung nach Anspruch 3,
- wobei Fußbereiche (60) der ersten Nuten (6) auf einem ersten Radius R1 und Kopfbereiche (61) der ersten Nuten (6) auf einem zweiten Radius R2 liegen,
- wobei Fußbereiche (70) der zweiten Nuten (7) auf einem dritten Radius R3 und Kopfbereiche der zweiten Nuten (7) auf einem vierten Radius R4 liegen,
- wobei der erste Radius R1 kleiner als der dritte Radius R3 ist,
- wobei der zweite Radius R2 grösser als der dritte Radius R3 ist, und
- wobei der vierte Radius R4 grösser als der zweite Radius R2 ist.

## Claims

1. A mechanical seal assembly comprising:
- a mechanical seal (2) comprising a rotating slide ring (3) having a first sliding surface (30) and a stationary slide ring (4) having a second sliding surface (40), a sealing gap (5) being defined between the first and second sliding surfaces,
- the stationary slide ring (4) having a through hole (42) extending from a rear side (41) of the stationary slide ring to an orifice (43) of the second sliding surface (40), and
- a gas supply line (8) extending from a gas source to an inlet (44) of the through hole (42) at the rear side of the stationary slide ring,
- wherein grooves (6, 7) are formed in at least one of the sliding surfaces (30, 40), the grooves being arranged in the radial direction between the orifice (43) of the through hole (42) and a radially outer outlet region (50) of the sealing gap (5), and further comprising,
- a throttle (9) arranged in the gas supply line (8),
- a filter (10) arranged on or in the gas supply line (8), and
- a check valve (11) arranged in the gas supply line (8).

2. The mechanical seal assembly according to claim 1, wherein first grooves (6) are formed in the first sliding surface (30) and second grooves (7) are formed in the second sliding surface (40).

3. The mechanical seal assembly according to claim 2, wherein the first grooves (6) are arranged offset in relation to the second grooves (7) in the radial direction of the mechanical seal (2).

4. The mechanical seal assembly according to any one of the preceding claims, wherein an annular groove (45) is formed in the second sliding surface (40) of the stationary slide ring (4), wherein the through hole (42) opens into the annular groove (45).

5. The mechanical seal assembly according to claims 4, wherein the throttle is adjustable to vary a gas flow through the throttle.

6. The mechanical seal assembly according to claims 4 or 5, wherein the throttle is a perforated disc.

7. The mechanical seal assembly according to one of the preceding claims, wherein the grooves (6, 7) are arranged on the sliding surfaces (30, 40) such that a groove-free sliding region (63, 73) is present between a head region (61, 71) of the grooves (6, 7) and an outer peripheral edge (62, 72) of the slide rings.

8. The mechanical seal assembly according to claim 3,
- wherein foot regions (60) of the first grooves (6) are located on a first radius R1 and head regions (61) of the first grooves (6) are located on a second radius R2,
- wherein foot regions (70) of the second grooves (7) are located on a third radius R3 and head regions of the second grooves (7) are located on a fourth radius R4
- wherein the first radius R1 is smaller than the third radius R3,
- wherein the second radius R2 is larger than the third radius R3, and
- wherein the fourth radius R4 is larger than the second radius R2.

## Revendications

1. Ensemble joint d'étanchéité à bague coulissante à auto-aspiration qui peut aspirer automatiquement un gaz d'arrêt, comprenant :
- un joint d'étanchéité à bague coulissante (2) présentant une bague coulissante (3) rotative avec une première surface de coulissement (30) et une bague coulissante (4) stationnaire avec une seconde surface de coulissement (40), dans lequel une fente étanche (5) est définie entre la première et la seconde surface de coulissement,
- dans lequel la bague coulissante (4) stationnaire présente une ouverture débouchante (42) qui mène d'un côté arrière (41) de la bague coulissante stationnaire à une embouchure (43) de la seconde surface de coulissement (40) et
- une conduite d'alimentation en gaz (8) qui est conçue afin de mener le gaz d'arrêt d'une source de gaz d'arrêt à une entrée (44) de l'ouverture débouchante (42) au niveau du côté arrière de la bague coulissante stationnaire,
- dans lequel des rainures (6, 7) sont réalisées au moins dans une des surfaces de coulissement (30, 40), dans lequel les rainures sont agencées dans le sens radial entre l'embouchure (43) de l'ouverture débouchante (42) et une zone de sortie (50) radialement extérieure de la fente étanche (5), et comprenant de plus
- un étranglement (9) qui est agencé dans la conduite d'alimentation en gaz (8),
- un filtre (10) qui est agencé au niveau ou dans la conduite d'alimentation en gaz (8) et
- un clapet antiretour (11) qui est agencé dans la conduite d'alimentation en gaz (8).

2. Ensemble joint d'étanchéité à bague coulissante selon la revendication 1, dans lequel des premières rainures (6) sont réalisées dans la première surface de coulissement (30) et des secondes rainures (7) sont réalisées dans la seconde surface de coulissement (40).

3. Ensemble joint d'étanchéité à bague coulissante selon la revendication 2, dans lequel les premières rainures (6) sont agencées en déport par rapport aux secondes rainures (7) dans le sens radial du joint d'étanchéité à bague coulissante (2).

4. Ensemble joint d'étanchéité à bague coulissante selon l'une quelconque des revendications précédentes, dans lequel une rainure annulaire (45) est réalisée dans la seconde surface de coulissement (40) de la bague coulissante (4) stationnaire, dans lequel l'ouverture débouchante (42) débouche dans la rainure annulaire (45).

5. Ensemble joint d'étanchéité à bague coulissante selon la revendication 1, dans lequel l'étranglement est réglable afin de modifier un débit de gaz passant par l'étranglement.

6. Ensemble joint d'étanchéité à bague coulissante selon la revendication 1 ou 5, dans lequel l'étranglement est un disque à trous.

7. Ensemble joint d'étanchéité à bague coulissante selon l'une quelconque des revendications précédentes, dans lequel les rainures (6, 7) sont agencées sur les surfaces de coulissement (30, 40) de telle manière qu'une zone de coulissement (63, 73) sans rainure soit présente entre une zone de tête (61, 71) des rainures (6, 7) et un bord périphérique (62, 72) extérieur des bagues coulissantes.

8. Ensemble joint d'étanchéité à bague coulissante selon la revendication 3,
- dans lequel des zones de pied (60) des premières rainures (6) se trouvent sur un premier rayon R1 et des zones de tête (61) des premières rainures (6) se trouvent sur un deuxième rayon R2,
- dans lequel des zones de pied (70) des secondes rainures (7) se trouvent sur un troisième rayon R3 et des zones de tête des secondes rainures (7) se trouvent sur un quatrième rayon R4,
- dans lequel le premier rayon R1 est inférieur au troisième rayon R3,
- dans lequel le deuxième rayon R2 est supérieur au troisième rayon R3 et
- dans lequel le quatrième rayon R4 est supérieur au deuxième rayon R2.
